# EUROPEAN PATENT APPLICATION

(11) **EP 3 300 872 A1**
(43) Date of publication of application: **04.04.2018**
(21) Application number: 16853301.6
(22) Date of filing: 23.06.2016
(51) Int. Cl.: B29C 43/36, B29C 43/52

(54) **FIBER-REINFORCED COMPOSITE MEMBER MOLDING DEVICE**

(30) Priority: 09.10.2015 WO PCT/JP2015/078810
(71) Applicant: IHI Corporation, Tokyo 135-8710 (JP)
(72) Inventor: ISHIZAKI, Masato, Tokyo 135-8710 (JP); KOBIKI, Akira, Tokyo 135-8710 (JP); MURAKAMI, Tsutomu, Tokyo 135-8710 (JP)
(74) Representative: MERH-IP Matias Erny Reichl Hoffmann Patentanwälte PartG mbB
(86) International application number: PCT/JP2016/068689
(87) International publication number: WO 2017/061146

(57) **Abstract**

In a fiber reinforced composite member molding apparatus 1 comprising a lower mold 2 having a cavity 21, an upper mold 3 having a core 31 which, in a mold clamping state, engages with the cavity 21 in the lower mold 2 and thereby clamps layered prepreg P, and heat sources 10 for heating the layered prepreg P through the lower mold 2 and the upper mold 3, and adapted to mold a fiber reinforced composite member from the layered prepreg P by applying pressure while heating resin in the layered prepreg P between the lower mold 2 and the upper mold 3 by the heat sources 10, the lower mold 2 is equipped with a cavity heat-escape prevention portion 26 and the upper mold 3 is equipped with a core heat-escape prevention portion 36. During heating for molding, escape of heat from the periphery of the cavity of the upper mold and the periphery of the core of the lower mold can be prevented, which allows a fiber reinforced composite member to be molded with almost no defects such as wrinkles.

## Description

### Technical Field

The present disclosure relates to a fiber reinforced composite member molding apparatus used to mold a fiber reinforced composite member from laminated sheets of prepreg formed of woven fiber fabric impregnated with thermosetting or thermoplastic resin as a matrix.

### Background Art

In molding a thermoplastic CFRP member (fiber reinforced composite member) from laminated sheets of prepreg formed of woven fiber fabric, such as woven carbon-fiber fabric, impregnated with thermoplastic resin as a matrix, a molding method using an autoclave is already established. Recently, as an alternative to the molding method using an autoclave, a mold hot press molding method using a molding apparatus is being developed.

An example of the molding apparatus for use in the mold hot press molding method is disclosed in Patent Document 1. This molding apparatus comprises a lower mold (first mold) and an upper mold (second mold) which is brought nearer to or away from the lower mold. The upper mold has a core projecting downward, and the lower mold has a cavity open upward.

In molding with this molding apparatus, in a mold open state, laminated sheets of prepreg are set in the cavity in the lower mold. Then, the upper mold is moved down so that the prepreg is clamped between the core of the upper mold and the cavity in the lower mold. In this state, heating is conducted while pressure is applied to the prepreg with the thermoplastic resin melted, by the upper and lower molds

After the application of pressure, the thermoplastic resin is cured by being cooled through the upper and lower molds. Consequently, a thermoplastic CFRP member of varying shape is obtained.

### Related Art Document

### Patent Document

Patent Document 1: Japanese Unexamined Patent Application Publication No. 2002-086483

### Summary of the Invention

### Problems to be solved by the Invention

In the above-described conventional molding apparatus, during heating for molding, heat is likely to escape from the respective peripheries of the lower mold cavity and the upper mold core that are engaged. Heat is likely to escape particularly from the region of the lower mold where the bottom and the wall of the cavity meet and the region of the upper mold where the core rises.

Thus, the above-described conventional molding apparatus has a problem that escape of heat from the respective peripheries of the lower mold cavity and the upper mold core during heating for molding may lead to local variations in heating temperature, which in turn may lead to defects such as wrinkles caused by meandering of carbon fibers in a molded product, or thermoplastic CFRP member. Solutions to this problem have been being sought.

This disclosure is presented in view of the above problem with the conventional technology. An object of the invention is to provide a fiber reinforced composite member molding apparatus which can prevent escape of heat at least from the periphery of a cavity in one of the molds, and thus, can mold a fiber reinforced composite member with almost no defects such as wrinkles.

### Means for Solving the Problems

The present invention comprises a first mold having a cavity which is brought into contact with prepreg formed of woven fiber fabric impregnated with resin (thermosetting or thermoplastic resin), a second mold which, in a mold clamping state, clamps laminated sheets of the prepreg against the cavity of the first mold, and a heating system for heating the resin in the prepreg through the first mold and the second mold, and is adapted to mold a fiber reinforced composite member from the laminated sheets of the prepreg by applying pressure while heating the resin in the prepreg between the lower mold and the upper mold by the heating system, wherein the first mold is equipped with a cavity heat-escape prevention portion which prevents escape of heat to the surroundings of the cavity while the resin in the prepreg is heated.

### Advantageous Effects of the Invention

The fiber reinforced composite member molding apparatus according to the present invention can prevent escape of heat at least from the periphery of a cavity in one of the molds during heating for molding.

This provides a greatly advantageous effect that a fiber reinforced composite member with almost no defects such as wrinkles can be obtained because local variations in heating temperature are not likely to occur.

### Brief Description of the Drawings

FIG. 1 is an explanatory perspective view showing a lower mold and an upper mold in a fiber reinforced composite member molding apparatus according to an embodiment of the present invention.
FIG. 2 is an explanatory cross-sectional view of the fiber reinforced composite member molding apparatus of FIG. 1.
FIG. 3 is an explanatory cross-sectional view of a fiber reinforced composite member molding apparatus according to another embodiment of the present invention.
FIG. 4 is a diagram showing an effect of the fiber reinforced composite member molding apparatus of FIG. 3.

### Mode for carrying out the Invention

With reference to the accompanying drawings, an embodiment of a fiber reinforced composite member molding apparatus according to the present invention will be described below.

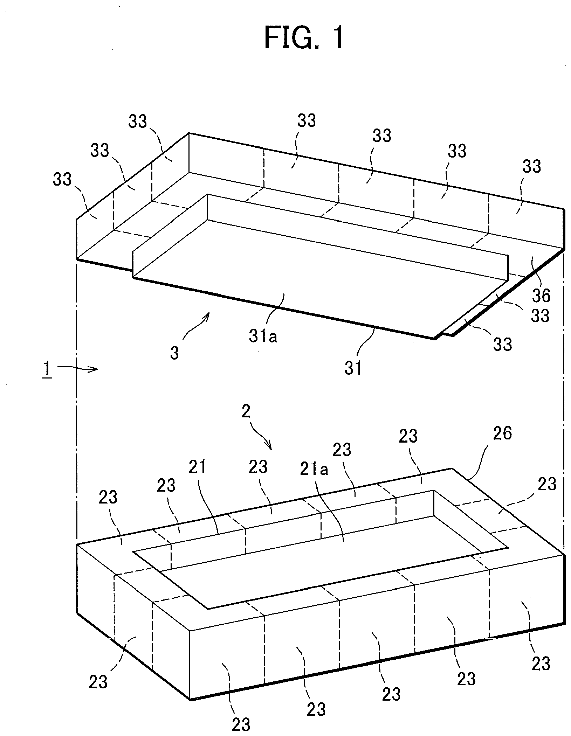

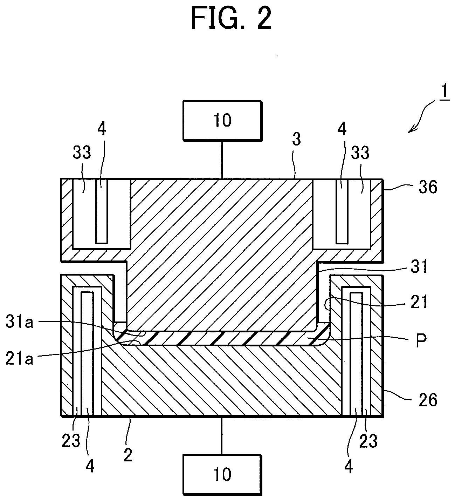

FIGS. 1 and 2 show an embodiment of the fiber reinforced composite member molding apparatus according to the present invention.

As shown in FIG. 1, a molding apparatus 1 is an apparatus to mold a fiber reinforced composite member (thermoplastic CFRP member, for example) from laminated sheets of prepreg formed of woven fiber fabric impregnated with thermosetting or thermoplastic resin, and comprises a lower mold (first mold) 2 and an upper mold (second mold) 3. Here, the sheets of prepreg formed of woven fiber fabric impregnated with thermosetting or thermoplastic resin are laminated such that sheets of differing fiber orientation form alternate layers. From these laminated sheets of prepreg, a fiber reinforced composite member of plate-like shape is molded.

As shown also in FIG. 2, the lower mold 2 has a cavity 21, while the upper mold 3, which is moved down and up, and thus, brought nearer to and away from the lower mold 2, has a core 31, which, in a mold clamping state, engages with the cavity 21 in the lower mold 2 and clamps the laminated sheets of prepreg, referred to as layered prepreg P (material to be molded into a fiber reinforced composite member), against the cavity 21.

The lower mold 2 is equipped with a heat source 10, which constitutes a heating system, for heating a molding surface 21a of the cavity 21 which is brought into contact with the layered prepreg P. Also the upper mold 3 is equipped with a heat source 10, which constitutes the heating system, for heating a molding surface 31a of the core 31 which is brought into contact with the layered prepreg P. The heat sources 10, 10 apply heat to the lower mold 2 and the upper mold 3, each from the side opposite the molding surface 21a, 31a. In this molding apparatus 1, by heating the thermosetting or thermoplastic resin in the layered prepreg P between the lower mold 2 and the upper mold 3 by the heat sources 10, 10 and applying pressure, the layered prepreg P is molded into a fiber reinforced composite member.

The molding apparatus 1 further comprises a cavity heat-escape prevention portion 26 provided to surround the cavity 21 in the lower mold 2. The cavity heat-escape prevention portion 26 comprises a plurality of heat-escape prevention cells 23 arranged around the cavity 21 and open at the side opposite the molding surface 21a, and a plurality of heaters 4 arranged within the heat-escape prevention cells 23, one for one.

During heating of the thermosetting or thermoplastic resin in the layered prepreg P, the cavity heat-escape prevention portion 26 prevents escape of heat to the surroundings of the cavity 21 by heating the interiors of the heat-escape prevention cells 23 by the heaters 4.

The molding apparatus 1 further comprises a core heat-escape prevention portion 36 provided to surround the core 31 of the upper mold 3. The core heat-escape prevention portion 36 comprises a plurality of heat-escape prevention cells 33 arranged around the core 31 and open at the side opposite the molding surface 31a, and a plurality of heaters 4 arranged within the heat-escape prevention cells 33, one for one.

During heating of the thermosetting or thermoplastic resin in the layered prepreg P, the core heat-escape prevention portion 36 prevents escape of heat to the surroundings of the core 31 by heating the interiors of the heat-escape prevention cells 33 by the heaters 4.

Next, a procedure of how to mold a fiber reinforced composite member with the molding apparatus 1 will be described. First, in a mold open state, layered prepreg P, or laminated sheets of prepreg are set in the cavity 21 in the lower mold 2.

Then, the upper mold 3 is moved down to bring the two molds into a mold clamping state. Consequently, the layered prepreg P is clamped between the core 31 of the upper mold 3 and the cavity 21 in the lower mold 2. In this state, heat is applied to the layered prepreg P by the upper and lower heat sources 10, 10 constituting the heating system, and pressure is applied to the layered prepreg P with the thermosetting or thermoplastic resin melted, by the upper mold 3 and the lower mold 2.

In the lower mold 2, during the application of heat and pressure, heat applied by the heat source 10 is prevented from escaping to the surroundings of the cavity 21, because the interiors of the heat-escape prevention cells 23 of the cavity heat-escape prevention portion 26 arranged to surround the cavity 21 are heated by the heaters 4. Also in the upper mold 3, heat applied by the heat source 10 is prevented from escaping to the surroundings of the core 31, because the interiors of the heat-escape prevention cells 33 of the core heat-escape prevention portion 36 arranged to surround the core 31 are heated by the heaters 4.

When the resin is a thermosetting resin, the thermosetting resin is cured by causing the heat sources 10 to continue the heating operation, and then, the heating operation of the heat sources 10 is stopped. Consequently, a product (fiber reinforced composite member) molded from the layered prepreg P is obtained.

When the resin is a thermoplastic resin, after the application of pressure, the heating operation of the heat sources 10 is stopped to cool and thereby cure the thermoplastic resin through the upper mold 3 and the lower mold 2. Consequently, a product (fiber reinforced composite member) molded from the layered prepreg P is obtained.

Thus, in the molding apparatus 1, while pressure and heat is applied to the layered prepreg P, or laminated sheets of prepreg, heat does not escape not only from the periphery of the cavity 21 in the lower mold 2 but also from the periphery of the core 31 of the upper mold 3 which engages with the cavity 21 in the lower mold 2, so that the layered prepreg P is heated without local variations. This allows a product (fiber reinforced composite member) without defects such as wrinkles caused by meandering of fibers to be molded from the layered prepreg P.

Further, in the molding apparatus 1, the cavity heat-escape prevention portion 26 for preventing escape of heat to the surroundings of the cavity 21 in the lower mold 2 as well as the core heat-escape prevention portion 36 for preventing escape of heat to the surroundings of the core 31 of the upper mold 3 has a simplified structure formed by arranging heaters 4 within the heat-escape prevention cells 23, 33, respectively.

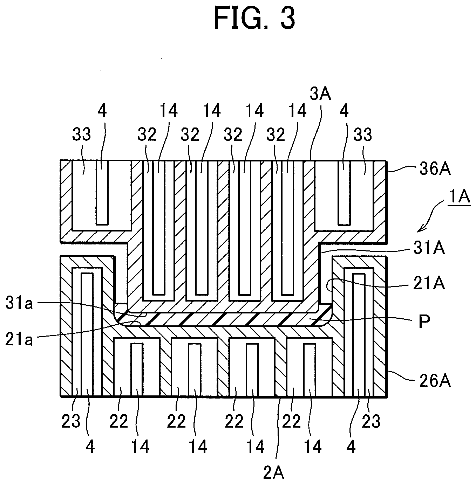

FIG. 3 shows another embodiment of a fiber reinforced composite member molding apparatus according to the present invention.

As shown in FIG. 3, also a molding apparatus 1A according to the present embodiment comprises a lower mold 2A having a cavity 21A and an upper mold 3A having a core 31A, which are brought nearer to or away from each other with layered prepreg P, or laminated sheets of prepreg interposed between the two.

The lower mold 2A is equipped with a plurality of heating heaters 14 for heating a molding surface 21a of the cavity 21A which is brought into contact with the layered prepreg P, where the heating heaters 14 are provided for a plurality of regions into which the molding surface 21a is divided, one for one. Also the upper mold 3A is equipped with a plurality of heating heaters 14 for heating a molding surface 31a of the core 31A which is brought into contact with the layered prepreg P, where the heating heaters 14 are provided for a plurality of regions into which the molding surface 31a is divided, one for one.

In this embodiment, the lower mold 2A has a plurality of heating cells 22 formed to correspond to the plurality of regions, respectively, the heating cells 22 being open at the side opposite the molding surface 21a. Also the upper mold 3A has a plurality of heating cells 32 formed to correspond to the plurality of regions, respectively, the heating cells 32 being open at the side opposite the molding surface 31a. The heating heaters 14 are arranged within the heating cells 22, 23, one for one. The heating heaters 14 constitute a heating system.

The molding apparatus 1A further comprises a cavity heat-escape prevention portion 26A provided to surround the plurality of heating cells 22 in the lower mold 2A. The cavity heat-escape prevention portion 26A comprises a plurality of heat-escape prevention cells 23 arranged around the plurality of heating cells 22 and open at the side opposite the molding surface 21a, and a plurality of heaters 4 arranged within the heat-escape prevention cells 23, one for one. (Although in the present embodiment, the heaters 4 are of the same type as the heating heaters 14 constituting the heating system, they are not restricted to the same type.)

During heating of the thermosetting or thermoplastic resin in the layered prepreg P, the cavity heat-escape prevention portion 26A prevents escape of heat to the surroundings of the cavity 21A by heating the interiors of the heat-escape prevention cells 23 by the heaters 4.

The molding apparatus 1A further comprises a core heat-escape prevention portion 36A provided to surround the plurality of heating cells 32 in the upper mold 3A. The core heat-escape prevention portion 36A comprises a plurality of heat-escape prevention cells 33 arranged around the plurality of heating cells 32 and open at the side opposite the molding surface 31a, and a plurality of heaters 4 arranged within the heat-escape prevention cells 33, one for one. (Although in the present embodiment, the heaters 4 are of the same type as the heating heaters 14 constituting the heating system, they are not restricted to the same type.)

During heating of the thermosetting or thermoplastic resin in the layered prepreg P, the core heat-escape prevention portion 36A also prevents escape of heat to the surroundings of the core 31A by heating the interiors of the heat-escape prevention cells 33 by the heaters 4.

Next, a procedure of how to mold a fiber reinforced composite member with the molding apparatus 1A will be described. First, in a mold open state, layered prepreg P, or laminated sheets of prepreg are set in the cavity 21A in the lower mold 2A.

Then, the upper mold 3A is moved down to bring the two molds into a mold clamping state. Consequently, the layered prepreg P is clamped between the core 31A of the upper mold 3A and the cavity 21A in the lower mold 2A. In this state, heat is applied to the layered prepreg P by the heating heaters 14 constituting the heating system, and pressure is applied to the layered prepreg P with the thermosetting or thermoplastic resin melted, by the upper mold 3A and the lower mold 2A.

In the lower mold 2A, during the application of heat and pressure, heat applied by the heating heaters 14 constituting the heating system is prevented from escaping to the surroundings of the cavity 21A, because the interiors of the heat-escape prevention cells 23 of the cavity heat-escape prevention portion 26 arranged to surround the plurality of heating cells 22 are heated by the heaters 4 provided separately from the heating heaters 14. Also in the upper mold 3A, heat applied by the heating heaters 14 is prevented from escaping to the surroundings of the core 31A, because the interiors of the heat-escape prevention cells 33 of the core heat-escape prevention portion 36 arranged to surround the plurality of heating cells 32 are heated by the heaters 4 provided separately from the heating heaters 14.

Also in the present embodiment, when the resin is a thermosetting resin, the thermosetting resin is cured by causing the heating heaters 14 constituting the heating system to continue the heating operation, and then, supply of electricity to the heating heaters 14 is stopped. Consequently, a product (fiber reinforced composite member) molded from the layered prepreg P is obtained.

When the resin is a thermoplastic resin, after the application of pressure, supply of electricity to the heating heaters 14 is stopped to cool and thereby cure the thermoplastic resin through the upper mold 3A and the lower mold 2A. Consequently, a product (fiber reinforced composite member) molded from the layered prepreg P is obtained.

Thus, in the molding apparatus 1A, while pressure and heat is applied to the layered prepreg P, or laminated sheets of prepreg, heat does not escape not only from the periphery of the cavity 21A in the lower mold 2A but also from the periphery of the core 31A of the upper mold 3A which engages with the cavity 21A in the lower mold 2A, so that the layered prepreg P is heated without local variations. This allows a product (fiber reinforced composite member) without defects such as wrinkles caused by meandering of fibers to be molded from the layered prepreg P.

Further, in the molding apparatus 1A, the molding surface 21a of the cavity 21A in the lower mold 2A as well as the molding surface 31a of the core 31A of the upper mold 3A is divided into a plurality of regions. The lower mold 2A as well as the upper mold 3A has heating cells 22 or 32 corresponding to the plurality of regions of the molding surface 21a or 31a and open at the side opposite the molding surface 21a or 31a. The heating heaters 14 are arranged within the heating cells 22, 32, respectively. This structure provides improved uniformity of heating of the layered prepreg P during the application of heat and pressure to the layered prepreg P.

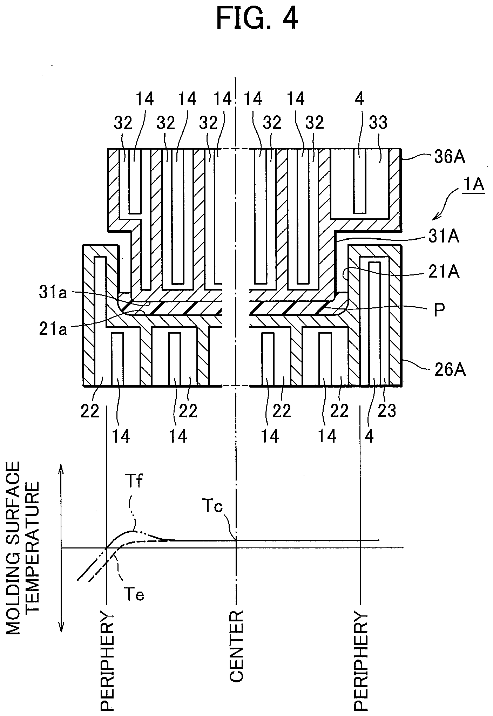

Here, as shown in the left half of FIG. 4, if heating cells 22, 32 are distributed evenly across the width of the lower mold 2A and the upper mold 3A without providing the cavity heat-escape prevention portion 26A and the core heat-escape prevention portion 26B, the molding surfaces 21a, 31a tend to exhibit gradually decreasing temperature Te in the periphery of the layered prepreg P, as compared with the temperature Tc in the center of the layered prepreg P.

If, in order to prevent this phenomenon, the intensity of heating by the heating heaters 14 in the heating cells 22, 32 located in the periphery of the layered prepreg P is increased, the molding surfaces 21a, 31a reach, in the periphery of the layered prepreg P, a temperature (Tf) higher than the temperature Tc in the center of the layered prepreg. The molding surfaces 21a, 31a thus do not exhibit a uniform distribution of temperature.

By contrast, if, as in the molding apparatus 1A according to the present embodiment, a cavity heat-escape prevention portion 26A and a core heat-escape prevention portion 36A are provided by forming heat-escape prevention cells 23 around the plurality of heating cells 22 and heat-escape prevention cells 33 around the plurality of heating cells 32 and arranging heaters 4 in the heat-escape prevention cells 23, 33, separately from the heating heaters 14 in the heating cells, the molding surfaces 21a, 31a exhibit, in the periphery, the same level of temperature as in the center, as shown in the right half of FIG. 4. Accordingly, the layered prepreg P is heated uniformly.

The embodiments have been described based on an example in which the upper mold 3, 3A has a core 31, 31A which, in a mold clamping state, engages with a cavity 21, 21A in the lower mold 2, 2A. The present invention is however not restricted to this. For example, the upper mold 3, 3A may have a flat core providing a molding surface to be received shallowly in the cavity 21, 21A of the lower mold 2, 2A.

Further, the embodiments have been described based on an example in which the woven fiber fabric constituting the prepreg is woven carbon-fiber fabric, or fabric woven from carbon fibers. The present invention is however not restricted to this.

The fiber reinforced composite member molding apparatus according to the present disclosure is not restricted to the described embodiments.

A first aspect of the present invention is a fiber reinforced composite member molding apparatus, comprising a first mold having a cavity which is brought into contact with prepreg formed of woven fiber fabric impregnated with resin (thermosetting or thermoplastic resin), a second mold which, in a mold clamping state, clamps laminated sheets of the prepreg against the cavity of the first mold, and a heating system for heating the resin in the prepreg through the first mold and the second mold, and adapted to mold a fiber reinforced composite member from the laminated sheets of the prepreg by applying pressure while heating the resin in the prepreg between the lower mold and the upper mold by the heating system, wherein the first mold is equipped with a cavity heat-escape prevention portion which prevents escape of heat to the surroundings of the cavity while the resin in the prepreg is heated.

In the fiber reinforced composite member molding apparatus according to the first aspect of the present invention, heat does not escape from the periphery of the cavity in the first mold during the application of heat and pressure to the laminated sheets of the prepreg, so that the laminated sheets of the prepreg is heated without local variations. Consequently, a fiber reinforced composite member without defects such as wrinkles caused by meandering of fibers can be obtained.

In a second aspect of the present invention, the second mold has a core which, in the mold clamping state, engages with the cavity in the first mold, thereby clamping the laminated sheets of the prepreg against the cavity, and is equipped with a core heat-escape prevention portion which prevents escape of heat to the surroundings of the core while the resin in the prepreg is heated.

In the fiber reinforced composite member molding apparatus according to the second aspect of the present invention, during the application of heat and pressure to the laminated sheets of the prepreg, heat does not escape not only from the periphery of the cavity in the first mold but also from the periphery of the core of the second mold which engages with the cavity in the first mold, so that the laminated sheets of the prepreg is heated without local variations. Consequently, a fiber reinforced composite member without defects such as wrinkles caused by meandering of fibers can be obtained.

In third and fourth aspects of the present invention, the cavity heat-escape prevention portion comprises heat-escape prevention cells formed in the first mold to surround the cavity and heaters arranged within the heat-escape prevention cells, and in fifth and sixth aspects of the present invention, the core heat-escape prevention portion comprises heat-escape prevention cells formed in the second mold to surround the core and heaters arranged within the heat-escape prevention cells.

In the fiber reinforced composite member molding apparatus according to any of the third to sixth aspects of the present invention, the cavity heat-escape prevention portion for preventing escape of heat to the surroundings of the cavity in the first mold as well as the core heat-escape prevention portion for preventing escape of heat to the surroundings of the core of the second mold is provided by arranging heaters in the heat-escape prevention cells, respectively. This enables simplified structure.

In a seventh aspect of the present invention, the cavity in the first mold as well as the core of the second mold has a molding surface divided into a plurality of regions, the first mold as well as the second mold has a plurality of heating cells corresponding to the plurality of regions and open at the side opposite the molding surface, the heating cells each have a heating heater arranged therein, the cavity heat-escape prevention portion comprises heat-escape prevention cells formed in the first mold to surround the plurality of heating cells and heaters arranged within the heat-escape prevention cells, and the core heat-escape prevention portion comprises heat-escape prevention cells formed in the second mold to surround the plurality of heating cells and heaters arranged within the heat-escape prevention cells.

In the fiber reinforced composite member molding apparatus according to the seventh aspect, while heat and pressure is applied to the laminated sheets of prepreg, the molding surface of the cavity in the first mold as well as the molding surface of the core of the second mold provides a uniform distribution of temperature, so that the laminated sheets of prepreg is heated uniformly, without local variations. Consequently, a fiber reinforced composite member without defects such as wrinkles caused by meandering of fibers can be obtained.

In the fiber reinforced composite member molding apparatus according to each of the above aspects of the present invention, the woven fiber fabric constituting the prepreg may be, for example woven carbon-fiber fabric, or fabric woven from carbon fibers. The present invention is however not restricted to this.

Here, resins usable as a matrix with which to impregnate the woven fiber fabric include thermosetting resins such as epoxy resin, phenol resin and polyimide resin, and thermoplastic resins such as PEEK (polyether ether ketone resin), PEI (polyetherimide resin) and PIXA (thermoplastic polyimide resin).

### Explanation of Reference Signs

1, 1A Fiber reinforced composite member molding apparatus
2, 2A Lower mold (first mold)
3, 3A Upper mold (second mold)
4 Heater (heat-escape prevention portion)
10 Heat source (heating system)
14 Heating heater (heating system)
21, 21A Cavity
21a Cavity-side molding surface
22, 32 Heating cell (heating system)
23 Heat-escape prevention cell (cavity heat-escape prevention portion)
26, 26A Cavity heat-escape prevention portion
31, 31A Core
31a Core-side molding surface
33 Heat-escape prevention cell (core heat-escape prevention portion)
36, 36A Core heat-escape prevention portion
P Layered prepreg (material to be molded into a fiber reinforced composite member)

## Claims

1. A fiber reinforced composite member molding apparatus, comprising
a first mold having a cavity which is brought into contact with prepreg formed of woven fiber fabric impregnated with resin,
a second mold which, in a mold clamping state, clamps laminated sheets of the prepreg against the cavity of the first mold, and
a heating system for heating the resin in the prepreg through the first mold and the second mold, and
adapted to mold a fiber reinforced composite member from the laminated sheets of the prepreg by applying pressure while heating the resin in the prepreg between the lower mold and the upper mold by the heating system, wherein
the first mold is equipped with a cavity heat-escape prevention portion which prevents escape of heat to the surroundings of the cavity while the resin in the prepreg is heated.

2. The fiber reinforced composite member molding apparatus according to claim 1, wherein the second mold has a core which, in the mold clamping state, engages with the cavity in the first mold, thereby clamping the laminated sheets of the prepreg against the cavity, and is equipped with a core heat-escape prevention portion which prevents escape of heat to the surroundings of the core while the resin in the prepreg is heated.

3. The fiber reinforced composite member molding apparatus according to claim 1, wherein the cavity heat-escape prevention portion comprises heat-escape prevention cells formed in the first mold to surround the cavity, and heaters arranged within the heat-escape prevention cells.

4. The fiber reinforced composite member molding apparatus according to claim 2, wherein the cavity heat-escape prevention portion comprises heat-escape prevention cells formed in the first mold to surround the cavity, and heaters arranged within the heat-escape prevention cells.

5. The fiber reinforced composite member molding apparatus according to claim 2, wherein the core heat-escape prevention portion comprises heat-escape prevention cells formed in the second mold to surround the core, and heaters arranged within the heat-escape prevention cells.

6. The fiber reinforced composite member molding apparatus according to claim 4, wherein the core heat-escape prevention portion comprises heat-escape prevention cells formed in the second mold to surround the core, and heaters arranged within the heat-escape prevention cells.

7. The fiber reinforced composite member molding apparatus according to claim 2, wherein the cavity in the first mold as well as the core of the second mold has a molding surface divided into a plurality of regions, the first mold as well as the second mold has a plurality of heating cells corresponding to the plurality of regions and open at the side opposite the molding surface, the heating cells each have a heating heater arranged therein, the cavity heat-escape prevention portion comprises heat-escape prevention cells formed in the first mold to surround the plurality of heating cells and heaters arranged within the heat-escape prevention cells, and the core heat-escape prevention portion comprises heat-escape prevention cells formed in the second mold to surround the plurality of heating cells and heaters arranged within the heat-escape prevention cells.
